# EUROPEAN PATENT APPLICATION

(11) **EP 4 269 369 A1**
(43) Date of publication of application: **01.11.2023**
(21) Application number: 21910781.0
(22) Date of filing: 21.12.2021
(51) Int. Cl.: C03C 27/12

(54) **LAMINATED GLASS**

(30) Priority: 25.12.2020 JP 2020216752
(71) Applicant: SEKISUI CHEMICAL CO., LTD., Osaka-shi Osaka 530-8565 (JP)
(72) Inventor: CHOU, Kinryou, Tsukuba-shi, Ibaraki 300-4292 (JP); NOHARA, Atsushi, Kouka-shi, Shiga 528-8585 (JP)
(74) Representative: Ter Meer Steinmeister & Partner
(86) International application number: PCT/JP2021/047318
(87) International publication number: WO 2022/138638

(57) **Abstract**

Provided is a laminated glass in which creasing is reduced in the interlayer film and having excellent appearance although an interlayer film including a film having optical properties is used. A laminated glass according to the present invention comprises a first lamination glass member, a second lamination glass member, and an interlayer film, the interlayer film is arranged between the first lamination glass member and the second lamination glass member, the interlayer film includes a film having optical properties, and a second layer containing a thermoplastic resin, a maximum value of distance from an end part of the first lamination glass member to an end part of the film having optical properties is 15 mm or less, and in a 5-cm region inward from the end part of the first lamination glass member, a maximum value of height of recesses and projections of surface of the film having optical properties in cross section observation along a thickness direction of the film having optical properties is 100 um or less.

## Description

### TECHNICAL FIELD

The present invention relates to laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates (lamination glass members).

As an interlayer film, an interlayer film including a film having optical properties such as a polyethylene terephthalate film (PET film) is sometimes used.

The following Patent Document 1 discloses a laminated glass in which an interlayer film is sandwiched between at least two glass plates having curved surface. The interlayer film includes a resin film layer, and an adhesion resin layer that is laminated on the entire surfaces of both sides of the resin film layer. In the laminated glass, the resin film layer has a plurality of defective parts in the peripheral part, and the generating line of the resin film layer and the outer peripheral line of the adhesion resin layer have approximately the same shape. Patent Document 1 indicates a polyethylene terephthalate film as the film of the resin film layer.

The following Patent Document 2 discloses a biaxially oriented laminated polyester film and a structure for laminated glass in which an interlayer film is laminated on at least either side of the biaxially oriented polyester film. In the structure for laminated glass, the biaxially-oriented laminated polyester film has a laminated configuration of a total of 51 or more layers in which the first layer and the second layer are alternately laminated, and polyester that forms the first layer is polyethylene naphthalate. The coefficient of thermal contraction when the biaxially-oriented laminated polyester film is heat-treated at 120°C for 30 minutes is 0.8% or less.

### Related Art Document

### Patent Documents

Patent Document 1: WO2010/093023 A1
Patent Document 2: JP 2013-209246 A

### SUMMARY OF THE INVENTION

### PROBLEMS TO BE SOLVED BY THE INVENTION

In an interlayer film including a film having optical properties such as a polyethylene terephthalate film (PET film), a crease is likely to be generated in the interlayer film during production of laminated glass. A crease is likely to be generated especially in the peripheral part of the interlayer film.

It is an object of the present invention to provide a laminated glass in which creasing is reduced in the interlayer film and having excellent appearance despite the use of the interlayer film including the film having optical properties.

### MEANS FOR SOLVING THE PROBLEMS

According to a broad aspect of the present invention, there is provided a laminated glass comprising a first lamination glass member, a second lamination glass member, and an interlayer film, the interlayer film being arranged between the first lamination glass member and the second lamination glass member, the interlayer film including a film having optical properties, and a second layer containing a thermoplastic resin, a maximum value of distance from an end part of the first lamination glass member to an end part of the film having optical properties being 15 mm or less; in a 5-cm region inward from the end part of the first lamination glass member, a maximum value of height of recesses and projections of surface of the film having optical properties in cross section observation along a thickness direction of the film having optical properties being 100 um or less.

In a specific aspect of the laminated glass according to the present invention, in the 5-cm region, the maximum value of height of recesses and projections of surface of the film having optical properties in cross section observation along the thickness direction of the film having optical properties is 50 um or less.

In a specific aspect of the laminated glass according to the present invention, in the 5-cm region, a maximum value of haze of the laminated glass is 2% or less.

In a specific aspect of the laminated glass according to the present invention, a maximum value of haze of the laminated glass is 2% or less.

In a specific aspect of the laminated glass according to the present invention, each of the first lamination glass member and the second lamination glass member has a corner part of 100° or less in plan view.

In a specific aspect of the laminated glass according to the present invention, each of the first lamination glass member and the second lamination glass member has a corner part of 80° or less in plan view.

In a specific aspect of the laminated glass according to the present invention, the laminated glass is obtained by conducting: an arranging step of arranging the interlayer film between the first lamination glass member and the second lamination glass member to obtain a laminate; and a deaerating step of deaerating such that a pressure to be exerted on corner parts of the first lamination glass member and the second lamination glass member is 8 MPa or less.

In a specific aspect of the laminated glass according to the present invention, the laminated glass is obtained by conducting the deaerating step in a condition that a vacuum rubber tube is attached to an outer periphery of the laminate, a condition that the laminate is arranged inside a vacuum bag, or a condition that the laminate is pressed by two rubber rolls using a nipper roll.

### EFFECT OF THE INVENTION

The laminated glass according to the present invention is a laminated glass including a first lamination glass member, a second lamination glass member, and an interlayer film, and the interlayer film is arranged between the first lamination glass member and the second lamination glass member. In the laminated glass according to the present invention, the interlayer film includes a film having optical properties, and a second layer containing a thermoplastic resin. In the laminated glass according to the present invention, a maximum value of distance from an end part of the first lamination glass member to an end part of the film having optical properties is 15 mm or less. In the laminated glass according to the present invention, in a 5-cm region inward from the end part of the first lamination glass member, a maximum value of height of recesses and projections of surface of the film having optical properties in the cross-section observation along the thickness direction of the film having optical properties is 100 um or less. In the laminated glass according to the present invention, since the aforementioned configuration is provided, creasing in the interlayer film is reduced and excellent appearance is achieved despite the use of the interlayer film including the film having optical properties.

### BRIEF DESCRIPTION OF DRAWINGS

[Fig. 1] Fig. 1(a) is a sectional view schematically showing a laminated glass in accordance with a first embodiment of the present invention, and Fig. 1(b) is a plan view schematically showing the laminated glass in accordance with the first embodiment of the present invention.
[Fig. 2] Fig. 2(a) is a sectional view schematically showing a laminated glass in accordance with a second embodiment of the present invention, and Fig. 2(b) is a plan view schematically showing the laminated glass in accordance with the second embodiment of the present invention.
[Fig. 3] Fig. 3 is a plan view schematically showing one example of a lamination glass member that can be used in the laminated glass of the present invention.
[Fig. 4] Fig. 4(a) and Fig. 4(b) are views schematically showing shapes of vacuum rubber tubes that can be used in producing a laminated glass.
[Fig. 5] Fig. 5 is a plan view of a lamination glass member used in Examples.

### MODE(S) FOR CARRYING OUT THE INVENTION

Hereinafter, the details of the present invention will be described.

The laminated glass according to the present invention is a laminated glass including a first lamination glass member, a second lamination glass member, and an interlayer film (interlayer film for laminated glass), and the interlayer film is arranged between the first lamination glass member and the second lamination glass member. In the laminated glass according to the present invention, the interlayer film includes a film having optical properties, and a second layer containing a thermoplastic resin. In the laminated glass according to the present invention, a maximum value of distance from an end part of the first lamination glass member to an end part of the film having optical properties is 15 mm or less. In the laminated glass according to the present invention, in a 5-cm region inward from the end part of the first lamination glass member, a maximum value of height of recesses and projections of surface of the film having optical properties in the cross-section observation along the thickness direction of the film having optical properties is 100 um or less. The 5-cm region is a region from the position of 0 mm that is the end part of the first lamination glass member to the position of 5 cm inward from the end part of the first lamination glass member.

In the laminated glass according to the present invention, since the aforementioned configuration is provided, creasing in the interlayer film is reduced and excellent appearance is achieved despite the use of the interlayer film including the film having optical properties. In the laminated glass according to the present invention, it is also possible to avoid creasing in the interlayer film.

Also, in the laminated glass according to the present invention, since the aforementioned configuration is provided, it is possible to achieve excellent visible light transmittance and Haze of the laminated glass.

In producing a laminated glass using an interlayer film including a film having optical properties such as a polyethylene terephthalate film (PET film), a crease can be generated in the film having optical properties, and a crease is likely to be generated, especially, in an end part of the film in a conventional method for producing a laminated glass. As a result, a crease is generated in the interlayer film, and the appearance of the laminated glass is impaired.

The present inventors found that creasing in the interlayer film in the case of using the interlayer film including a film having optical properties is caused by increase in pressure exerted on the lamination glass member in the deaerating step in production of the laminated glass (especially, the pressure exerted on a corner part of a lamination glass member).

The laminated glass according to the present invention can be produced by decreasing the pressure exerted on the lamination glass member (especially, the pressure exerted on a corner part of a lamination glass member) in the deaerating step, resulting that creasing in the interlayer film is reduced and excellent appearance is achieved. The details of the method for producing a laminated glass according to the present invention will be described later.

Hereinafter, specific embodiments of the present invention will be described with reference to the drawings.

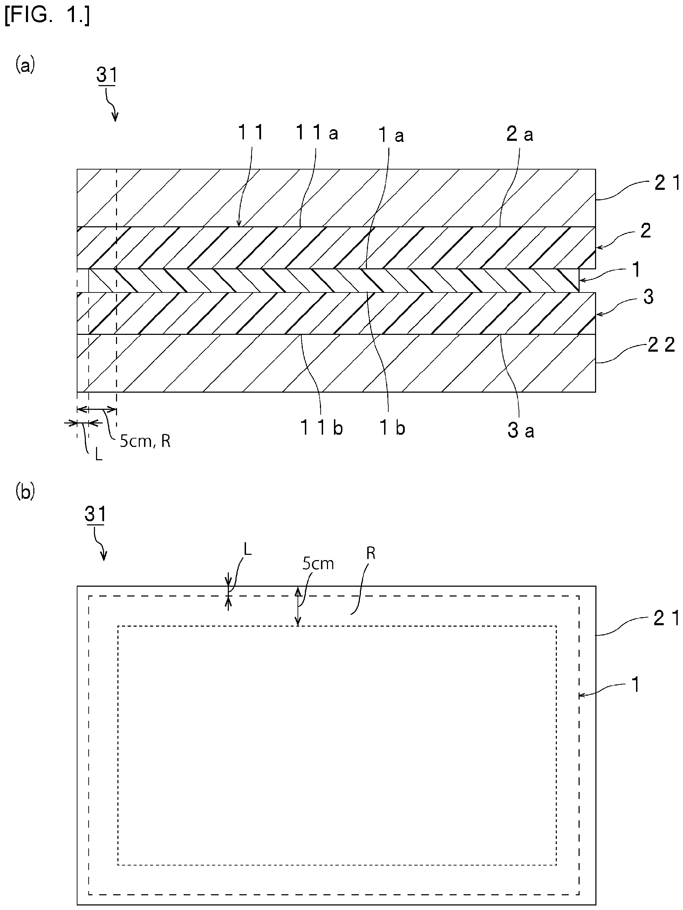

Fig. 1(a) is a sectional view schematically showing a laminated glass in accordance with a first embodiment of the present invention, and Fig. 1(b) is a plan view schematically showing the laminated glass in accordance with the first embodiment of the present invention.

A laminated glass 31 shown in Fig. 1 includes a first lamination glass member 21, a second lamination glass member 22 and an interlayer film 11.

The interlayer film 11 has a film 1 having optical properties, a second layer 2, and a third layer 3. The interlayer film 11 has a three-layer structure. The second layer 2 is arranged on a first surface (one surface) 1a side of the film 1 to be layered thereon. The third layer 3 is arranged on a second surface (other surface) 1b side opposite to the first surface 1a of the film 1 to be layered thereon.

The first lamination glass member 21 is layered on a first surface 11a of the interlayer film 11. The second lamination glass member 22 is layered on a second surface 11b opposite to the first surface 11a of the interlayer film 11. The first lamination glass member 21 is layered on an outer surface 2a of the second layer 2. The second lamination glass member 22 is layered on an outer surface 3a of the third layer 3.

In the interlayer film 11, an end part of the film 1 and an end part of the second layer 2 are not aligned. In the interlayer film 11, the end part of the film 1 and an end part of the third layer 3 are not aligned. The end part of the film 1 exists on the inner side than the end part of the second layer 2. The end part of the film 1 exists on the inner side than the end part of the third layer 3.

In the laminated glass 31, the end part of the second layer 2 and the end part of the first lamination glass member 21 are aligned. In the laminated glass 31, the end part of the third layer 3 and the end part of the second lamination glass member 22 are aligned. In the laminated glass 31, the end part of the film 1 exists on the inner side than the end part of the first lamination glass member 21. In the laminated glass 31, the end part of the film 1 exists on the inner side than the end part of the second lamination glass member 22.

The distance from the end part of the first lamination glass member (first lamination glass member 21) to the end part of the film having optical properties (film 1) is referred to as distance L.

In the laminated glass 31, the maximum value of distance L is 15 mm or less.

The region of 5 cm inward from the end part of the first lamination glass member (first lamination glass member 21) is referred to as a 5-cm region R.

In the laminated glass 31, in the 5-cm region R, the maximum value of height of recesses and projections of surface of the film 1 in observation of the cross section along the thickness direction of the film 1 (Fig. 1(a)) is 100 um or less. The cross section along the thickness direction of the film 1 is a cross section along the thickness direction of the laminated glass 31.

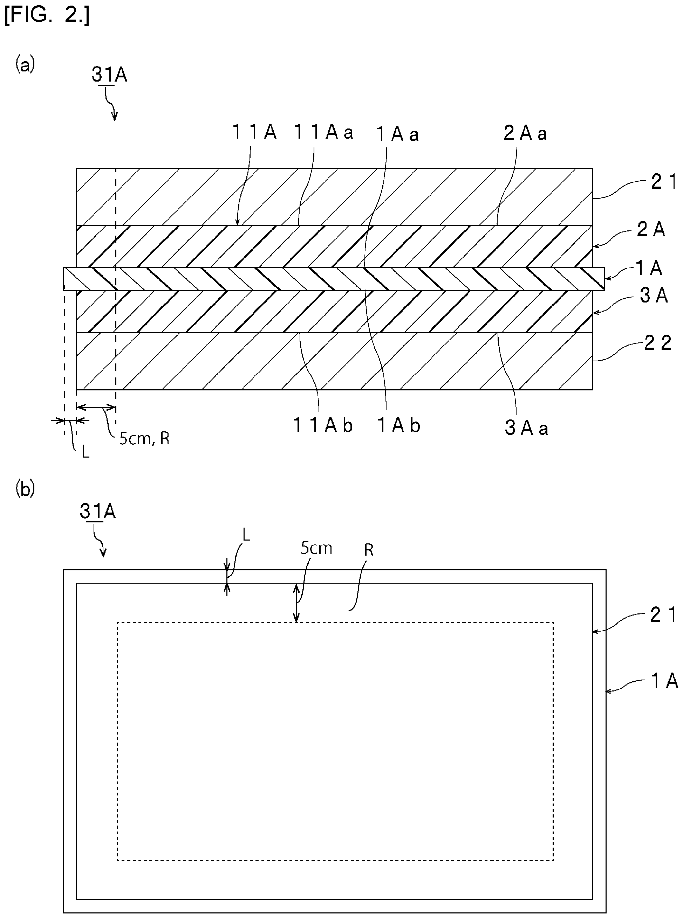

Fig. 2(a) is a sectional view schematically showing a laminated glass in accordance with a second embodiment of the present invention, and Fig. 2(b) is a plan view schematically showing the laminated glass in accordance with the second embodiment of the present invention.

A laminated glass 31A shown in Fig. 2 includes the first lamination glass member 21, the second lamination glass member 22 and an interlayer film 11A.

The interlayer film 11A has a film 1A having optical properties, a second layer 2A, and a third layer 3A. The interlayer film 11A has a three-layer structure. The second layer 2A is arranged on a first surface 1Aa side of the film 1A to be layered thereon. The third layer 3A is arranged on a second surface 1Ab side opposite to the first surface 1Aa of the film 1A to be layered thereon.

The first lamination glass member 21 is layered on a first surface (one surface) 11Aa of the interlayer film 11A. The second lamination glass member 22 is layered on a second surface (other surface) 11Ab opposite to the first surface 11Aa of the interlayer film 11A. The first lamination glass member 21 is layered on an outer surface 2Aa of the second layer 2A. The second lamination glass member 22 is layered on an outer surface 3Aa of the third layer 3A.

In the interlayer film 11A, an end part of the film 1A and an end part of the second layer 2A are not aligned. In the interlayer film 11A, the end part of the film 1A and an end part of the third layer 3A are not aligned. The end part of the film 1A exists on the outer side than the end part of the second layer 2A. The end part of the film 1A exists on the outer side than the end part of the third layer 3A.

In the laminated glass 31A, the end part of the second layer 2A and the end part of the first lamination glass member 21 are aligned. In the laminated glass 31A, the end part of the third layer 3A and the end part of the second lamination glass member 22 are aligned. In the laminated glass 31A, the end part of the film 1A exists on the outer side than the end part of the first lamination glass member 21. In the laminated glass 31A, the end part of the film 1A exists on the outer side than the end part of the second lamination glass member 22.

The distance from the end part of the first lamination glass member (first lamination glass member 21) to the end part of the film having optical properties (film 1A) is referred to as distance L.

In the laminated glass 31A, the maximum value of distance L is 15 mm or less.

The region of 5 cm inward from the end part of the first lamination glass member (first lamination glass member 21) is referred to as a 5-cm region R.

In the laminated glass 31A, in the 5-cm region R, the maximum value of height of recesses and projections of surface of the film 1A in observation of the cross section along the thickness direction of the film 1A (Fig. 2(a)) is 100 um or less. The cross section along the thickness direction of the film 1A is a cross section along the thickness direction of the laminated glass 31A.

In the laminated glass according to the present invention, the maximum value of distance L from the end part of the first lamination glass member to the end part of the film having optical properties is 15 mm or less, preferably 12 mm or less, more preferably 10 mm or less, further preferably 5 mm or less, especially preferably 3 mm or less, most preferably 0 mm. When the maximum value of distance L is the above upper limit or less, it is possible to exert the effect of the present invention more effectively. In the laminated glass according to the present invention, the maximum value of distance L may be 0 mm or more, may be more than 0 mm, may be 5 mm or more, and may be 10 mm or more.

In the laminated glass according to the present invention, the maximum value of distance L' from the end part of the second lamination glass member to the end part of the film having optical properties is preferably 15 mm or less, more preferably 12 mm or less, further preferably 10 mm or less, still more preferably 5 mm or less, especially preferably 3 mm or less, most preferably 0 mm. When the maximum value of distance L' is the above upper limit or less, it is possible to exert the effect of the present invention more effectively. In the laminated glass according to the present invention, the maximum value of distance L' may be 0 mm or more, may be more than 0 mm, may be 5 mm or more, and may be 10 mm or more.

In the laminated glass according to the present invention, an average value of distance L from the end part of the first lamination glass member to the end part of the film having optical properties is preferably 15 mm or less, more preferably 12 mm or less, further preferably 10 mm or less, still more preferably 5 mm or less, especially preferably 3 mm or less, most preferably 0 mm. When the average value of distance L is the above upper limit or less, it is possible to exert the effect of the present invention more effectively. In the laminated glass according to the present invention, the average value of distance L may be 0 mm or more, may be more than 0 mm, may be 3 mm or more, and may be 5 mm or more.

In the laminated glass according to the present invention, the average value of distance L' from the end part of the second lamination glass member to the end part of the film having optical properties is preferably 15 mm or less, more preferably 12 mm or less, further preferably 10 mm or less, still more preferably 5 mm or less, especially preferably 3 mm or less, most preferably 0 mm. When the average value of distance L' is the above upper limit or less, it is possible to exert the effect of the present invention more effectively. In the laminated glass according to the present invention, the average value of distance L' may be 0 mm or more, may be more than 0 mm, may be 3 mm or more, and may be 5 mm or more.

In general, the distance L and the distance L' coincide with each other at the same site in the laminated glass. Also, in general, the maximum value of the distance L and the maximum value of the distance L' coincide with each other, and the average value of distance L and the average value of distance L' coincide with each other.

The distance L and the distance L' refer to the distance between the end part of the first lamination glass member or the second lamination glass member, and the end part of the film in plan view of the laminated glass. The maximum value of each of the distance L and the distance L' refers to a farthest distance between the end part of the first lamination glass member or the second lamination glass member, and the end part of the film in plan view of the laminated glass. In a part where the end part of the first lamination glass member and the end part of the film are aligned, the distance L is 0, and in a part where the end part of the second lamination glass member and the end part of the film are aligned, the distance L' is 0.

In the laminated glass according to the present invention, in the 5-cm region R inward from the end part of the first lamination glass member, the maximum value of height of recesses and projections of surface of the film having optical properties in the cross-section observation along the thickness direction of the film having optical properties is 100 um or less. The maximum value of height of recesses and projections is preferably 50 um or less, more preferably 30 um or less, further preferably 10 um or less, most preferably 0 um. When the maximum value of height of recesses and projections is the above upper limit or less, creasing in the interlayer film is reduced, and it is possible to exert the effect of the present invention more effectively. When the maximum value of height of recesses and projections is 0 µm, the surface of the film having optical properties does not have recesses and projections. In the laminated glass according to the present invention, the maximum value of height of recesses and projections may be 0 um or more, may be more than 0 µm, may be 1 um or more, may be 5 um or more, may be 10 um or more, may be 30 um or more, and may be 50 um or more.

In the laminated glass according to the present invention, in a 5-cm region R' inward from an end part of the second lamination glass member, the maximum value of height of recesses and projections of surface of the film having optical properties in the cross-section observation along the thickness direction of the film having optical properties is preferably 100 um or less. The maximum value of height of recesses and projections is more preferably 50 um or less, further preferably 30 um or less, especially preferably 10 um or less, most preferably 0 um. When the maximum value of height of recesses and projections is the above upper limit or less, creasing in the interlayer film is reduced, and it is possible to exert the effect of the present invention more effectively. When the maximum value of height of recesses and projections is 0 µm, the surface of the film having optical properties does not have recesses and projections. In the laminated glass according to the present invention, the maximum value of height of recesses and projections may be 0 um or more, may be more than 0 µm, may be 1 um or more, may be 5 um or more, may be 10 um or more, may be 30 um or more, and may be 50 um or more.

In general, the 5-cm region R and the 5-cm region R' coincide with each other.

More specifically, the maximum value of height of recesses and projections can be determined by observing a cross section along the thickness direction of the film having optical properties in the laminated glass, and calculating a distance of height (difference in height) between the highest part (for example, the highest part of the highest projection part) and the lowest part (for example, the deepest part of the deepest recess) in the surface of the film having optical properties. The height of recesses and projections is measured on the principal planes of both sides of the film having optical properties. Specifically, referring to Fig. 1(a), the height of recesses and projections is measured in the upper surface and the lower surface of the film 1. In Fig. 1(a), the surface of the film 1 (upper surface and lower surface) are described as flat planes, however, the surface of the film 1 may have recesses and projections. Also, recesses and projections in the surface of the film 1 are measured in a region where the film 1 exists in the 5-cm region R and in the 5-cm region R'. Similarly, referring to Fig. 2(a), height of recesses and projections is measured in the upper surface and the lower surface of the film 1A. In Fig. 2(a), the surface of the film 1A (upper surface and lower surface) are described as flat planes, however, the surface of the film 1A may have recesses and projections. Also, recesses and projections in the surface of the film 1A are measured in a region where the film 1A exists in the 5-cm region R and in the 5-cm region R'.

The maximum value of height of recesses and projections can be measured with a microscope.

Even when the laminated glass is arranged in a vehicle or the like (for example, when arranged as a windshield, and as side glass), the maximum value of height of recesses and projections can be measured. For example, in the laminated glass arranged in a vehicle or the like, the laminated glass may be cut around the location where recesses and projections (crease) are generated, and the maximum value of height of recesses and projections may be measured using the cut laminated glass. Before and after cutting of the laminated glass, height of recesses and projections of the film having optical properties little changes.

In each of the 5-cm region R and the 5-cm region R', a maximum value of haze of the laminated glass is preferably 2% or less, more preferably 1.5% or less, further preferably 1.0% or less. When the maximum value of haze is the above upper limit or less, it is possible to further enhance the transparency of the laminated glass. In each of the 5-cm region R and the 5-cm region R', the maximum value of haze of the laminated glass may be 0.8% or more, may be 1.0% or more, and may be 1.5% or more.

The maximum value of haze of laminated glass is preferably 2% or less, more preferably 1.5% or less, further preferably 1.0% or less. When the maximum value of haze is the above upper limit or less, it is possible to further enhance the transparency of the laminated glass. The maximum value of haze of laminated glass may be 0.8% or more, may be 1.0% or more, and may be 1.2% or more.

The haze is measured using a haze meter in accordance with JIS K6714.

In each of the 5-cm region R and the 5-cm region R', an average value of visible light transmittance of the laminated glass is preferably 70% or more, more preferably 72% or more, and is preferably 90% or less, more preferably 88% or less.

In the entire laminated glass, an average value of visible light transmittance of the laminated glass is preferably 70% or more, more preferably 72% or more, and is preferably 90% or less, more preferably 88% or less.

The visible light transmittance is determined by measuring visible light transmittance at a wavelength ranging from 380 nm to 780 nm of the laminated glass in accordance with JIS R3212 using a spectrophotometer (for example, "U-4100" available from Hitachi High-tech Corporation).

Hereinafter, members used in the laminated glass according to the present invention are further described.

### (First and second lamination glass members)

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first and second lamination glass members be a glass plate or a PET (polyethylene terephthalate) film and the laminated glass include at least one glass plate as the first and/or second lamination glass members. It is especially preferred that both of the first and second lamination glass members be glass plates.

Examples of the glass plate include an inorganic glass plate and an organic glass plate. Examples of the inorganic glass plate include float plate glass, heat ray-absorbing plate glass, heat ray-reflecting plate glass, polished plate glass, figured plate glass, wired plate glass, colored plate glass, UV screening plate glass, chemically tempered plate glass, physically tempered plate glass, clear glass, green glass, and the like. In the wired plate glass, the wire may be netted. The UV screening plate glass is plate glass in which an ultraviolet ray screening agent layer is formed on the surface of the glass plate. The organic glass plate is a synthetic resin glass plate substituted for an inorganic glass plate. Examples of the organic glass plate include a polycarbonate plate, a polyethylene terephthalate plate, and a poly(meth) acrylic resin plate, and the like. Examples of the poly(meth)acrylic resin plate include a polymethyl (meth)acrylate plate, and the like.

Each of the first lamination glass member and the second lamination glass member may be a lamination glass member having a curved surface, and may be a lamination glass member not having a curved surface. Each of the first lamination glass member and the second lamination glass member may be curved glass and may be flat glass.

Although respective thicknesses of the first lamination glass member and the second lamination glass member are not particularly limited, the thickness is preferably 0.5 mm or more, more preferably 1 mm or more and is preferably 5 mm or less. When the lamination glass member is a glass plate, the thickness of the glass plate is preferably 0.5 mm or more, more preferably 1 mm or more, and is preferably 5 mm or less. When the lamination glass member is a PET film, the thickness of the PET film is preferably 0.03 mm or more and is preferably 0.5 mm or less.

Respective thicknesses of the first lamination glass member and the second lamination glass member may be the same or different from each other. When the respective thicknesses of the first lamination glass member and the second lamination glass member are different from each other, the thickness of the glass member having a larger thickness may be twice or more, and ten times or less the thickness of the glass member having a smaller thickness.

The thickness of the first and second lamination glass members means an average thickness.

Each of the first lamination glass member and the second lamination glass member preferably has a corner part of 100° or less in plan view, more preferably has a corner part of 90° or less, and further preferably has a corner part of 80° or less. The smaller the angle of the corner part, the larger the pressure exerted on the lamination glass member in production of the laminated glass, and the more likely a crease is generated in the interlayer film. However, in the present invention, the effect of the present invention can be exerted even when the angle of the corner part is small.

When the lamination glass member has a rounded corner part, the angle of the rounded corner part means the angle when the corner part is not rounded.

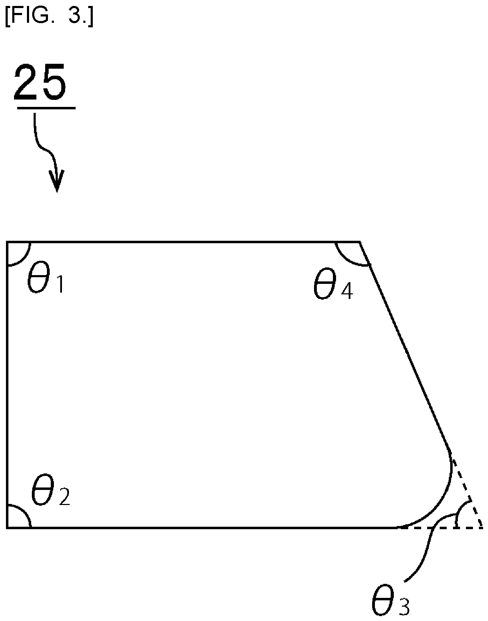

Fig. 3 is a plan view schematically showing one example of a lamination glass member that can be used in the laminated glass of the present invention. Fig. 3 is a view for illustrating the angle of a corner part of a lamination glass member.

A lamination glass member 25 is the first lamination glass member or the second lamination glass member. The lamination glass member 25 has four corner parts. The lamination glass member 25 has a first corner part having angle θ₁, a second corner part having angle θ₂, a third corner part having angle θ₃, and a fourth corner part having angle θ₄. Since the third corner part is rounded, angle θ₃ when the third corner part is not rounded is the angle of the third corner part.

### (Interlayer film for laminated glass)

The interlayer film includes at least a film having optical properties, and a second layer containing a thermoplastic resin. The second layer is arranged on the first surface side of the film having optical properties. Therefore, the interlayer film has a structure of at least two layers. The interlayer film may have a two or more-layer structure, a three-layer structure, a three or more-layer structure, a four or more-layer structure, a five or more-layer structure, or a six or more-layer structure.

The interlayer film having a three or more-layer structure includes a film having optical properties, a second layer, and a third layer. In this case, the second layer is arranged on a first surface side of the film having optical properties, and the third layer is arranged on a second surface side opposite to the first surface of the film having optical properties.

In the interlayer film, other layer may be arranged between the film having optical properties and the second layer, and between the film having optical properties and the third layer. It is preferred that the film having optical properties and the second layer be directly layered, and it is preferred that the film having optical properties and the third layer be directly layered.

The structure of the interlayer film may partially vary. For example, the interlayer film may have a part having a one-layer structure, and a part having a two or more-layer structure. The interlayer film may have a part having a one-layer structure, and a part having a three or more-layer structure. The interlayer film may have a part having a two-layer structure, and a part having a three or more-layer structure.

The interlayer film may have a part having a wedge-like sectional shape in the thickness direction. The interlayer film may have a part where the thickness gradually increases from the one end toward the other end, or a part where the thickness gradually decreases from the one end toward the other end. The interlayer film may have a part where the thickness gradually increases from the one end toward the other end, and may have a part where the thickness gradually decreases from the one end toward the other end. The sectional shape in the thickness direction of the interlayer film may be a wedge-like shape. Examples of the sectional shape in the thickness direction of the interlayer film include a trapezoidal shape, a triangular shape, a pentagonal shape, and the like.

### <Film having optical properties>

Examples of the film having optical properties include a polyethylene terephthalate film (PET film), an infrared reflecting film, and the like.

Examples of the infrared reflective film include a resin film with metal foil, a multilayer laminate film in which a metal layer and a dielectric layer are formed on a resin film, a multilayer resin film, and a liquid crystal film, and the like. These films have the property of reflecting infrared rays.

The resin film with metal foil includes a resin film, and a metal foil layered on the outer surface of the resin film. Examples of the material of the resin film include a polyethylene terephthalate resin, a polyethylene naphthalate resin, a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl chloride resin, and a polyimide resin. Examples of the material of the metal foil include aluminum, copper, silver, gold, palladium, and alloys containing these metals.

The multilayer laminate film in which a metal layer and a dielectric layer are formed on a resin film is a multilayer laminate film in which any number of layers of the metal layer and the dielectric layer are alternately layered on the resin film. In the multilayer laminate film in which a metal layer and a dielectric layer are formed on a resin layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer.

Examples of the material of the resin film in the multilayer laminate film include polyethylene, polypropylene, polylactic acid, poly(4-methylpentene-1), polyvinylidene fluoride, cyclic polyolefin, polymethyl methacrylate, polyvinyl chloride, polyvinyl alcohol, polyamide such as nylon 6, 11, 12, 66 and the like, polystyrene, polycarbonate, polyethylene terephthalate, polyethylene naphthalate, polyester, polyphenylene sulfide, and polyether imide. As the material of the metal layer in the multilayer laminate film, those exemplified as the material of the metal foil in the resin film with metal foil can be exemplified. A coating layer of metal or a mixed oxide of metal can be given to both faces or either face of the metal layer. Examples of the material of the coating layer include ZnO, Al₂O₃, Ga₂O₃, InO₃, MgO, Ti, NiCr and Cu. Also, examples of the dielectric layer in the multilayer laminate film include indium oxide.

The multilayer resin film is a laminate film in which a plurality of resin films are layered. As the material of the multilayer resin film, those exemplified as the material of the resin film in the multilayer laminate film can be exemplified. The number of layered resin films in the multilayer resin film is 2 or more, and may be 3 or more, and may be 5 or more. The number of layered resin films in the multilayer resin film may be 1000 or less, may be 100 or less, or may be 50 or less.

The multilayer resin film may be a multilayer resin film in which any number of layers of two or more kinds of thermoplastic resin films having different optical properties (refractive index) are layered alternately or randomly. Such a multilayer resin film is so configured that a desired infrared reflecting property is obtained.

As the liquid crystal film, a film in which any number of layers of cholesteric liquid crystal layers that reflect the light of any wavelength are layered can be recited. Such a liquid crystal film is so configured that desired infrared reflecting property is obtained.

The infrared reflective film may contain infrared reflective particles. The infrared reflective particles are particles having the infrared reflecting property, and for example, tabular particles having a thickness of 1 nm or more and 1000 um or less can be recited. For example, in the resin film in which silver nano tabular particles are dispersed, an infrared reflective film having infrared reflecting property is obtained by adjusting the thickness, the surface area and the arrangement state of the silver nano tabular particles.

Examples of commercially available products of the PET film include "Lumirror 100-U34" and "Lumirror 100-U48" available from TORAY INDUSTRIES, INC., "DIA FOIL 0-100E" available from Mitsubishi Chemical Corporation, and the like. Examples of commercially available products of the infrared reflecting film include "Ultra-multilayer resin film Nano 90S" and "Ultra-multilayer resin film Nano 80S" available from 3M, and the like.

It is preferred that the film having optical properties be a polyethylene terephthalate film. When a laminated glass is produced by using an interlayer film including a polyethylene terephthalate film, a crease is more likely to be generated in the polyethylene terephthalate film. In this respect, in the present invention, creasing in the interlayer film is reduced even when the film having optical properties is a polyethylene terephthalate film, so that a laminated glass having excellent appearance can be produced.

An average thickness of the film having optical properties is preferably 23 um or more, more preferably 50 um or more, and is preferably 200 um or less, more preferably 120 um or less. When the average thickness is the above lower limit or more and the above upper limit or less, it is possible to exert the effect of the present invention more effectively.

### <Second and third layers>

### Thermoplastic resin:

The second layer contains a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the third layer contain a resin (hereinafter, sometimes described as a resin (3)). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). The thermoplastic resin (2) and the thermoplastic resin (3) may be the same as or different from each other. The polyvinyl acetal resin (2) and the polyvinyl acetal resin (3) may be the same or different from each other. One kind of each of the thermoplastic resin (2) and the thermoplastic resin (3) may be used alone, and two or more kinds thereof may be used in combination. One kind of each of the polyvinyl acetal resin (2) and the polyvinyl acetal resin (3) may be used alone, and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, an ionomer resin, a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of the laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

Each of the contents of the hydroxyl group of the polyvinyl acetal resin (2) and the polyvinyl acetal resin (3) is preferably 25% by mole or more, more preferably 28% by mole or more, still more preferably 30% by mole or more, further preferably more than 31% by mole, still further preferably 31.5% by mole or more, especially preferably 32% by mole or more, and most preferably 33% by mole or more. Each of the contents of the hydroxyl group of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above-described lower limit or more or more than the above-described lower limit, the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree of each of the polyvinyl acetal resin (2) and the polyvinyl acetal resin (3) is preferably 0.01% by mole or more, more preferably 0.5% by mole or more and is preferably 10% by mole or less, more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of each of the polyvinyl acetal resin (2) and the polyvinyl acetal resin (3) (the butyralization degree in the case of a polyvinyl butyral resin) is preferably 55% by mole or more, more preferably 60% by mole or more and is preferably 75% by mole or less, more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method conforming to JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method conforming to JIS K6728 "Testing methods for polyvinyl butyral".

In 100% by weight of the thermoplastic resin contained in the second layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second layer, the content of the polyvinyl acetal resin is preferably 100% by weight or less. It is preferred that the main ingredient (50% by weight or more) of the thermoplastic resin of the second layer be a polyvinyl acetal resin.

In 100% by weight of the thermoplastic resin contained in the third layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the third layer, the content of the polyvinyl acetal resin is preferably 100% by weight or less. It is preferred that the main ingredient (50% by weight or more) of the thermoplastic resin of the third layer be a polyvinyl acetal resin.

### Plasticizer:

From the viewpoint of further enhancing the adhesive strength of an interlayer film, it is preferred that the second layer contain a plasticizer (hereinafter, sometimes described as a plasticizer (2)). From the viewpoint of further enhancing the adhesive strength of an interlayer film, it is preferred that the third layer contain a plasticizer (hereinafter, sometimes described as a plasticizer (3)). When the thermoplastic resin contained in the interlayer film is a polyvinyl acetal resin, it is especially preferred that the interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

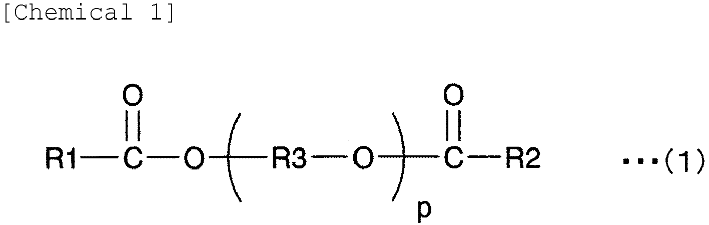

In the formula (1), R1 and R2 each represent an organic group with 2 to 10 carbon atoms, R3 represents an ethylene group, an isopropylene group, or an n-propylene group, and p represents an integer of 3 to 10. R1 and R2 in the formula (1) each are preferably an organic group with 5 to 10 carbon atoms, and more preferably an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

In the second layer, the content of the plasticizer (2) per 100 parts by weight of the thermoplastic resin (2) is referred to as a content (2). In the third layer, the content of the plasticizer (3) relative to 100 parts by weight of the thermoplastic resin (3) is referred to as content (3). Each of the content (2) and the content (3) is preferably 5 parts by weight or more, more preferably 10 parts by weight or more, still more preferably 15 parts by weight or more, further preferably 20 parts by weight or more, especially preferably 24 parts by weight or more, and most preferably 25 parts by weight or more. Each of the content (2) and the content (3) is preferably 45 parts by weight or less, more preferably 40 parts by weight or less, further preferably 35 parts by weight or less, especially preferably 32 parts by weight or less, and most preferably 30 parts by weight or less. When the content (2) and the content (3) are the above lower limit or more, the flexibility of the interlayer film is enhanced and the handling of the interlayer film is facilitated. When the content (2) and the content (3) are the above upper limit or less, the penetration resistance of the laminated glass is further enhanced.

### Metal salt:

It is preferred that the second layer contain at least one kind of metal salt (hereinafter, sometimes described as Metal salt M) of alkali metal salts and alkali earth metal salts. It is preferred that the third layer contain the Metal salt M. The alkali earth metal means six metals of Be, Mg, Ca, Sr, Ba, and Ra. By the use of the Metal salt M, controlling the adhesivity between the interlayer film and a lamination glass member or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt M contained in the interlayer film contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the interlayer film containing the Metal salt M or a layer containing the Metal salt M (a second layer, or a third layer) is preferably 5 ppm or more, more preferably 10 ppm or more, further preferably 20 ppm or more, and is preferably 300 ppm or less, more preferably 250 ppm or less, further preferably 200 ppm or less. When the total of the contents of Mg and K is the above lower limit or more and the above upper limit or less, the adhesivity between the interlayer film and a glass plate or the adhesivity between respective layers in the interlayer film can be further well controlled.

### Ultraviolet ray screening agent:

It is preferred that the second layer contain an ultraviolet ray screening agent. It is preferred that the third layer contain an ultraviolet ray screening agent. By the use of an ultraviolet ray screening agent, even when the laminated glass is used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazin-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the layer containing the ultraviolet ray screening agent (a second layer, or a third layer), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In this case, decrease in visible light transmittance after a lapse of the term is further suppressed. In 100% by weight of the layer containing the ultraviolet ray screening agent (a second layer, or a third layer), the content of the ultraviolet ray screening agent and the content of the benzotriazole compound are preferably 2.5% by weight or less, more preferably 2% by weight or less, further preferably 1% by weight or less, especially preferably 0.8% by weight or less. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

### Oxidation inhibitor:

It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-dit-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

In order to maintain high visible light transmittance of the laminated glass over a long period of time, the content of the oxidation inhibitor in 100% by weight of the layer containing the oxidation inhibitor (a second layer, or a third layer) is preferably 0.03% by weight or more, more preferably 0.1% by weight or more. Moreover, since an effect commensurate with the addition of an oxidation inhibitor is not attained, it is preferred that the content of the oxidation inhibitor be 2% by weight or less in 100% by weight of the layer containing the oxidation inhibitor (a second layer or a third layer).

### Other ingredients:

Each of the second layer, and the third layer may contain additives such as heat shielding particles, a light stabilizer, a coupling agent, a dispersing agent, a coloring matter, a surfactant, a flame retardant, an antistatic agent, an adhesive force adjusting agent other than metal salt, a moisture-resistance agent, a fluorescent brightening agent, and an infrared ray absorber, as necessary. One kind of these additives may be used alone, and two or more kinds thereof may be used in combination.

### Heat shielding particles:

The second layer may contain heat shielding particles. The third layer may contain heat shielding particles. It is preferred that at least one layer of the interlayer film contain heat shielding particles. The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays. Since the interlayer film contains heat shielding particles, it is possible to improve the heat shielding property and the appearance designability of the laminated glass.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Examples of the tungsten oxide particles include sodium-doped tungsten oxide particles, cesium-doped tungsten oxide particles (CWO particles), thallium-doped tungsten oxide particles, and rubidium-doped tungsten oxide particles, and the like. One kind of the heat shielding particles may be used alone, and two or more kinds thereof may be used in combination.

The average particle diameter of the heat shielding particles is preferably 10 nm or more, more preferably 20 nm or more, and is preferably 100 nm or less, more preferably 80 nm or less, further preferably 50 nm or less. When the average particle diameter is the above lower limit or more, it is possible to sufficiently enhance the heat ray shielding property. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a film, a second layer, or a third layer), the content of the heat shielding particles is preferably 0.01% by weight or more, more preferably 0.1% by weight or more, further preferably 1% by weight or more, especially preferably 1.5% by weight or more. In 100% by weight of the interlayer film, or in 100% by weight of a layer containing the heat shielding particles (a film, a second layer, or a third layer), the content of the heat shielding particles is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### Coloring matter:

The second layer may contain a coloring matter. The third layer may contain a coloring matter. It is preferred that at least one layer of the interlayer film contain a coloring matter. By containing a coloring matter, it is possible to color the laminated glass to have a desired color tone. Examples of the coloring matter include a pigment, a dye and the like. Examples of the coloring matter include a blue coloring matter, a red coloring matter, a yellow coloring matter, a green coloring matter, and the like. The kind and the content of the coloring matter may be appropriately changed depending on the intended color tone. One kind of the coloring matter may be used alone, and two or more kinds thereof may be used in combination.

In 100% by weight of the interlayer film or in 100% by weight of a layer containing the coloring matter (a film, a second layer, or a third layer), the content of the coloring matter is preferably 0.001% by weight or more, more preferably 0.003% by weight or more, further preferably 0.01% by weight or more, especially preferably 0.05% by weight or more. In 100% by weight of the interlayer film, or in 100% by weight of a layer containing the coloring matter (a film, a second layer, or a third layer), the content of the coloring matter is preferably 0.8% by weight or less, more preferably 0.5% by weight or less, further preferably 0.3% by weight or less, especially preferably 0.2% by weight or less, most preferably 0.1% by weight or less. When the content of the coloring matter is the above lower limit or more and the above upper limit or less, it becomes easier to ensure appropriate coloring while achieving excellent weatherability.

### <Other details of interlayer film>

The interlayer film has one end and the other end being at an opposite side of the one end. The one end and the other end are both end parts facing each other in the interlayer film. The interlayer film may be an interlayer film in which the thickness of the one end and the thickness of the other end are the same, or may be an interlayer film in which the thickness of the other end is larger than the thickness of the one end.

When the sectional shape in the thickness direction of the interlayer film is a wedge-like shape, the sectional shape in the thickness direction of the film having optical properties may be a wedge-like shape, the sectional shape in the thickness direction of the second layer may be a wedge-like shape, and the sectional shape in the thickness direction of the third layer may be a wedge-like shape. From the viewpoint of further suppressing double images, the wedge angle of a layer (a film, a second layer, or a third layer) having a wedge-like sectional shape is preferably 0.01 mrad (0.0006 degrees) or more, more preferably 0.2 mrad (0.0115 degrees) or more, and is preferably 2.0 mrad (0.1146 degrees) or less, more preferably 1.5 mrad (0.0401 degrees) or less. From the viewpoint of suppressing double images, the wedge angle of the interlayer film is preferably 0.01 mrad (0.0006 degrees) or more, more preferably 0.2 mrad (0.0115 degrees) or more, and is preferably 2.0 mrad (0.1146 degrees) or less, more preferably 1.5 mrad (0.0401 degrees) or less. The wedge angle of the interlayer film or the layer is an interior angle at the intersection point between a straight line connecting the first surface parts of the interlayer film or the layer of the maximum thickness part and the minimum thickness part of the interlayer film or the layer and a straight line connecting the second surface parts of the interlayer film or the layer of the maximum thickness part and the minimum thickness part of the interlayer film or the layer.

The method for producing the interlayer film is not particularly limited. As the method for producing the interlayer film, a conventionally known method can be used. For example, a production method including kneading the above-described ingredients, and molding the interlayer film can be recited. A production method of extrusion-molding is preferred because the method is suitable for continuous production. In particular, it is preferred that the second and third layers be formed by extrusion molding.

The method of kneading is not particularly limited. Examples of the kneading method include methods using an extruder, a plastograph, a kneader, a Banbury mixer or a calender roll, or the like. Among these, a method of using an extruder is suitable, and a method of using a biaxial extruder is more suitable because such a method is suited for continuous production.

In obtaining the interlayer film, after preparing the film having optical properties, the second layer and the third layer separately, the second layer, the film having optical properties and the third layer may be laminated to obtain the interlayer film. In this case, the method of laminating these layers is not particularly limited. For example, as a method of laminating these layers, a heat lamination method and the like are recited. The interlayer film may be a laminate film in which the second layer, the film having optical properties, and the third layer are integrated by lamination. In the interlayer film, the second layer, the film having optical properties, and the third layer may be stacked to such an extent that they can be separated from each other.

Also, the second layer, the film having optical properties, and the third layer may be laminated by co-extrusion to obtain the interlayer film. Also, the third layer may be laminated on the side of the film having optical properties of the coextruded product prepared by coextrusion of the second layer and the film having optical properties to obtain the interlayer film. Also, the second layer may be laminated on the side of the film having optical properties of the coextruded product prepared by coextrusion of the third layer and the film having optical properties to obtain the interlayer film.

Also, a composition for forming the second and third layers may be applied on the surface of the film having optical properties to form the second and third layers, to thereby obtain the interlayer film.

For the reason of excellent production efficiency of the interlayer film, the second layer and the third layer preferably contain the same polyvinyl acetal resin, and more preferably contain the same polyvinyl acetal resin and the same plasticizer. For the reason of excellent production efficiency of the interlayer film, it is further preferred that the second layer and the third layer be formed of the same resin composition.

The maximum thickness of the interlayer film is preferably 0.1 mm or more, more preferably 0.25 mm or more, further preferably 0.5 mm or more, especially preferably 0.8 mm or more and is preferably 3.8 mm or less, more preferably 2 mm or less, further preferably 1.5 mm or less.

From the viewpoint of the practical aspect and the viewpoint of sufficiently enhancing the adhesive force and the penetration resistance, the maximum thickness of a surface layer of the interlayer film is preferably 0.001 mm or more, more preferably 0.2 mm or more, further preferably 0.3 mm or more, and is preferably 1 mm or less, more preferably 0.8 mm or less.

From the viewpoint of the practical aspect and the viewpoint of sufficiently enhancing the penetration resistance, the maximum thickness of a layer (intermediate layer) arranged between two surface layers of the interlayer film is preferably 0.001 mm or more, more preferably 0.1 mm or more, and further preferably 0.2 mm or more and is preferably 0.8 mm or less, more preferably 0.6 mm or less, and further preferably 0.3 mm or less.

### (Other details of laminated glass)

The laminated glass has one end and the other end being at the opposite side of the one end. The one end and the other end are end parts of both sides facing each other in the laminated glass. The laminated glass may be a laminated glass in which the thickness of the one end and the thickness of the other end are the same, or may be a laminated glass in which the thickness of the other end is larger than the thickness of the one end.

Hue of the laminated glass can be indicated by L* value, a* value and b* value in the L*a*b* color system. In the present invention, the hue of laminated glass means a value obtained by measuring the laminated glass with a chroma colorimeter color. It is preferred that the hue of laminated glass be measured at the center position of the interlayer film for laminated glass.

The L*a*b* color system is a color system that forms a color solid consisting of orthogonal coordinates defined by a* axis and b* axis indicating chromaticity, and L* axis that is orthogonal to the orthogonal coordinates. Increase in a* value on the positive side means increase in redness, and increase in a* value on the negative side means increase in greenness. Also, increase in b* value on the positive side means increase in yellowness, and increase in b* value on the negative side means increase in blueness. L* value corresponds to brightness, and L* value of 100 means white, and L* value of 0 means black.

The L* value of laminated glass is not particularly limited. The L* value of laminated glass is preferably 15 or more, and is preferably 60 or less, more preferably 50 or less, further preferably 40 or less, especially preferably 30 or less. Unless b* value is too small, L* value is not too small, and blackness is not excessively strong. Preferred ranges of the L* value of laminated glass include the range of 15 to 60, and the range of 15 to 30.

A smaller absolute value of the a* value of laminated glass is preferred because redness increases as the absolute value increases on the positive side, and greenness increases as the absolute value increases on the negative side. The a* value of laminated glass is preferably -48 or more, more preferably -45 or more, further preferably -35 or more, and is preferably +3 or less, more preferably +1 or less, further preferably 0 or less. Preferred ranges of the a* value of laminated glass include the range of -45 to +3, the range of -45 to +1, the range of -40 to +1, and the range of -35 to 0.

The b* value of laminated glass is preferably -17 or more, more preferably -10 or more, and is preferably 15 or less, more preferably 10 or less. Preferred ranges of the b* value of laminated glass include the range of -17 to +15, and the range of -10 to +10.

By setting L* value, a* value and b* value within the above ranges, it is possible to express various colorings suited for the application parts.

The laminated glass can be used for automobiles, railway vehicles, aircraft, ships, buildings, and the like. The laminated glass can also be used for applications other than these applications. It is preferred that the laminated glass be laminated glass for vehicles or for buildings and it is more preferred that the laminated glass be laminated glass for vehicles. The laminated glass can be used for a windshield, side glass, rear glass, roof glass or glass for backlight of an automobile, and the like. The laminated glass is suitably used for automobiles.

In a conventional production method of laminated glass, it is difficult to produce the laminated glass according to the present invention. In a conventional production method of laminated glass, since the pressure exerted on the lamination glass member (in particular, pressure exerted on a corner part of lamination glass member) is large in the deaerating step, a crease is likely to be generated in the film having optical properties. This crease is likely to be generated in a corner part.

The laminated glass according to the present invention can be obtained by reducing the pressure exerted on a lamination glass member (in particular, pressure exerted on a corner part of lamination glass member) in the deaerating step.

It is preferred that the method for producing a laminated glass include an arranging step of arranging the interlayer film between the first lamination glass member and the second lamination glass member to obtain a laminate.

It is preferred that the method for producing a laminated glass include a deaerating step of conducting deaeration such that a pressure to be exerted on corner parts of the first lamination glass member and the second lamination glass member is 8 MPa or less.

That is, it is preferred that the laminated glass be a laminated glass that is obtained by conducting the arranging step and the deaerating step.

In the deaerating step, the pressure exerted on corner parts of the first lamination glass member and the second lamination glass member is preferably 0.5 MPa or more, more preferably 1.0 MPa or more, and is preferably 8 MPa or less, more preferably 5 MPa or less. When the pressure is the above lower limit or more, it is possible to favorably pressure bonding the first and second lamination glass members, and the interlayer film. When the pressure is the above upper limit or less, it is possible to prevent generation of a crease in the interlayer film.

In the method for producing a laminated glass, it is preferred that deaeration in the deaerating step be conducted in (1) the condition that a vacuum rubber tube is attached to an outer periphery of the laminate, (2) the condition that the laminate is arranged inside a vacuum bag, or (3) the condition that the laminate is pressed by two rubber rolls using a nipper roll.

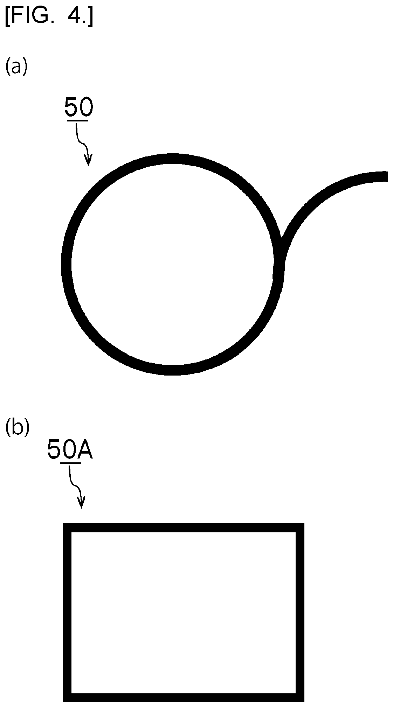

(1) In the case where aeration is conducted in the condition that the vacuum rubber tube is attached to the outer periphery of the laminate, it is preferred to use a round type vacuum rubber tube that is longer than the outer peripheral length of the laminate, or a cornered type vacuum rubber tube having the shape corresponding to the shape of the laminate as the vacuum rubber tube. As the round type vacuum rubber tube, a vacuum rubber tube having the shape of a vacuum rubber tube 50 shown in Fig. 4(a) can be recited. As the cornered type vacuum rubber tube, vacuum rubber tubes of polygonal types such as triangular and quadrangular and the like types are recited, and for example, a vacuum rubber tube having a vacuum rubber tube 50A shown in Fig. 4(b) can be recited. In the case where the round type vacuum rubber tube is used, it is preferred to sandwich a cushioning material between the vacuum rubber tube and the laminate. The cushioning material is not particularly limited, and a polycarbonate plate, a metal plate, and heat-resisting rubber and the like are recited. For example, the cushioning material is cut to fit the shape of the corner part of the lamination glass member, and the obtained cushioning material is attached to the corner part of the lamination glass member, and thus the pressure to be exerted on the corner part of the lamination glass member can be effectively reduced. By using a vacuum rubber tube having a specific shape, it is possible to effectively reduce the pressure to be exerted on the corner part of the lamination glass member.

In the method for producing a laminated glass, the temperature in the deaerating step is preferably 70°C or more, more preferably 80°C or more, and is preferably 150°C or less, more preferably 120°C or less.

In the method for producing a laminated glass, it is preferred that a step of autoclaving the laminate be provided after the deaerating step. The temperature in the step of autoclaving is preferably 110°C or more, and is preferably 150°C or less. In the step of autoclaving, the pressure to be exerted on the corner parts of the first lamination glass member and the second lamination glass member is preferably 1 MPa or more, and is preferably 1.5 MPa or less.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

The following lamination glass members were prepared.

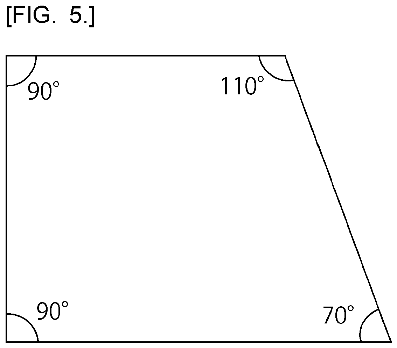

Clear glass having the shape shown in Fig. 5 in plan view (thickness 2.5 mm, length of outer periphery 100 cm)

The following materials for interlayer film were prepared.

### (Film having optical properties)

Polyethylene terephthalate film (PET film, "Ultra-multilayer resin film Nano 90S" available from 3M)

### (Thermoplastic resin)

Polyvinyl acetal resin (PVB, polyvinyl butyral resin in which n-butylaldehyde is used, average polymerization degree of 1700, content of hydroxyl group of 30% by mole, acetylation degree of 1% by mole, acetalization degree of 69% by mole).

### (Plasticizer)

Triethylene glycol di-2-ethylhexanoate (3GO)

### (Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

### (Oxidation inhibitor)

BHT (2,6-di-t-butyl-p-cresol)

### (Coloring matter)

Pigment black 6, pigment blue 15:1, pigment green 7, pigment red 149, and pigment violet 202

### (Heat shielding particles)

Tin-doped indium oxide particles

### (Example 1)

Preparation of resin composition for forming second layer and third layer:
The following ingredients were mixed, and kneaded sufficiently with a mixing roll to obtain a resin composition for forming a second layer and a third layer.

PVB: 100 parts by weight
3GO: 40 parts by weight
Tinuvin 326: An amount which is to be 0.2% by weight in the obtained second layer and third layer
BHT: An amount which is to be 0.2% by weight in the obtained second layer and third layer

### Preparation of interlayer film:

A PET film, and a resin composition for forming second and third layers were laminated to prepare an interlayer film having a three-layer structure (second layer (780 um thick)/PET film (100 um thick)/third layer (380 µm)). The interlayer film was prepared such that the end part of the PET film protrudes from the end parts of the second and third layers.

### Preparation of laminated glass:

The obtained interlayer film was cut into a shape corresponding to the shape of clear glass (shape shown in Fig. 5). The cut interlayer film was sandwiched between two sheets of clear glass to obtain a laminate of clear glass/interlayer film/clear glass. A round type vacuum rubber tube having an inner peripheral length of 105 cm was prepared. The obtained laminate was put into an oven set at 90°C in the condition that the vacuum rubber tube was attached to the outer periphery, and deaeration was conducted. The pressure exerted on the corner part of lamination glass member (corner part having an angle of 70°) at the time of deaeration was 5 MPa. Next, the temporarily press-bonded laminate was retained for 10 minutes in an autoclave at a temperature of 140°C and a pressure of 1.3 MPa, and then the temperature was lowered to 50°C and the pressure was returned to an atmospheric pressure to complete main press-bonding, and thus a laminated glass was obtained. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Example 2)

An interlayer film and a laminated glass were obtained in the same manner as that in Example 1 except that a trapezoidal (cornered type) type vacuum rubber tube having an inner peripheral length of 100 cm and a shape corresponding to the shape of clear glass was used in place of the round type vacuum rubber tube having an inner peripheral length of 105 cm. The pressure exerted on the corner part of lamination glass member (corner part having an angle of 70°) at the time of deaeration was 2.5 MPa. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Example 3)

A round type vacuum rubber tube having an inner peripheral length of 100 cm was used in place of the round type vacuum rubber tube having an inner peripheral length of 105 cm. Also, between the vacuum rubber tube and the laminate, a polycarbonate plate of 2 mm thick was used as a cushioning material, and the cushioning material cut out into 2 mm was sandwiched to fit with corner parts of the lamination glass member. An interlayer film and a laminated glass were obtained in the same manner as that in Example 1 except for the above. The pressure exerted on the corner part of lamination glass member (corner part having an angle of 70°) at the time of deaeration was 2.5 MPa. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Example 4)

An interlayer film and a laminated glass were obtained in the same manner as that in Example 1 except that deaeration was conducted in the condition that the obtained laminate was arranged inside a vacuum bag. The pressure exerted on the corner part of lamination glass member (corner part having an angle of 70°) at the time of deaeration was 2.5 MPa. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Example 5)

An interlayer film and a laminated glass were obtained in the same manner as that in Example 1 except that deareration was conducted in the condition that the obtained laminate was pressed by two rubber rolls by using a nipper roll. The pressure exerted on the corner part of lamination glass member (corner part having an angle of 70°) at the time of deaeration was 2.5 MPa. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Example 6)

An interlayer film and a laminated glass were obtained in the same manner as that in Example 1 except that a round type vacuum rubber tube having an inner peripheral length of 145 cm was used in place of the round type vacuum rubber tube having an inner peripheral length of 105 cm. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Example 7)

An interlayer film and a laminated glass were obtained in the same manner as that in Example 6 except that the sectional shape in the thickness direction of the second layer was a wedge-like shape having a minimum thickness (thickness of one end) of 670 um, a maximum thickness (end part) of 1515 um, an average thickness of 1096 um, and a wedge angle of 1.2 mrad. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Example 8)

An interlayer film and a laminated glass were obtained in the same manner as that in Example 6 except that an amount that is to be 0.17% by weight in the obtained second layer of heat shielding particles, tin-doped indium oxide particles were added to the resin composition for forming the second layer. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Example 9)

An interlayer film and a laminated glass were obtained in the same manner as that in Example 6 except that a coloring matter was added to the resin composition for forming the second layer. The amounts of the added coloring matters were such that pigment black 6 was 0.029% by weight, pigment blue 15:1 was 0.018% by weight, pigment green 7 was 0.011% by weight, pigment red 149 was 0.0063% by weight, and pigment violet 202 was 0.0093% by weight in the obtained second layer. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned. Also, when the sample was set in the deposition direction with respect to the light travelling direction of the spectrometer, the hue of the laminated glass was L*=27, a*=0.41, and b*=1.20 in the L*a*b* color system, and the visible light transmittance was 5.2%. At this time, the visible light transmittance at 380 to 780 nm was calculated in accordance with JIS R3211 (1998) using a spectrophotometer ("U-4100" available from Hitachi High-Tech Science Corporation) as a measuring device.

### (Comparative Example 1)

An interlayer film and a laminated glass were obtained in the same manner as that in Example 1 except that a round type vacuum rubber tube having an inner peripheral length of 100 cm was used in place of the round type vacuum rubber tube having an inner peripheral length of 105 cm. The pressure exerted on the corner part of lamination glass member (corner part having an angle of 70°) at the time of deaeration was 10 MPa. In the obtained laminated glass, the end part of the PET film existed on the outer side than the end part of the second layer, and existed on the outer side than the end part of the third layer. Also, in the obtained laminated glass, the end part of the second layer and the end part of the first lamination glass member were aligned, and the end part of the third layer and the end part of the second lamination glass member were aligned.

### (Evaluation)

### (1) Maximum value of distance L from end part of first lamination glass member to end part of PET film

Distance L of the obtained laminated glass was measured, and the maximum value of distance L was evaluated. In the obtained laminated glass, distance L' from the end part of the second lamination glass member to the end part of the film having optical properties was the same as distance L at the same site of the laminated glass. The maximum value of distance L' was the same as the maximum value of distance L. The average value of distance L was almost the same as the maximum value of distance L. The average value of distance L' was almost the same as the maximum value of distance L'.

### (2) Maximum value of height of recesses and projections of surface of PET film in 5-cm region R

A cross section along the thickness direction of PET film in laminated glass was observed in the 5-cm region R inward from the end part of the first lamination glass member. In the 5-cm region R, distance of height (difference in height) between the highest part (the highest part of the highest projection part) of the surface (upper surface and lower surface) of the PET film, and the lowest part (the deepest part of the deepest recess part) was measured by using a microscope ("DSX500" available from OLYMPUS Corporation) and determined as the maximum value of height of recesses and projections. Specifically, a distance between the upper surface of the PET film and the lower surface of the first lamination glass member (upper surface of the second layer) was measured, and difference between the shortest distance and the longest distance was determined as the maximum value of height of recesses and projections of the upper surface of the PET film. Similarly, distance between the lower surface of the PET film and the upper surface of the second lamination glass member (lower surface of the third layer) was measured, and difference between the shortest distance and the longest distance was determined as the maximum value of height of recesses and projections of the lower surface of the PET film. The larger one of the maximum value of height of recesses and projections of the upper surface of the PET film, and the maximum value of height of recesses and projections of the lower surface of the PET film was determined as the maximum value of height of recesses and projections of surface of the PET film. In Example 7 having the wedge-like second layer, only height of recesses and projections of the lower surface of the PET film was measured. In the case where the maximum value of height of recesses and projections is 0 um, the surface of the PET film does not have recesses and projections. Also, in the obtained laminated glass, the 5-cm region R' inward from the end part of the first lamination glass member was the same as the 5-cm region R.

### (3) Haze of laminated glass

Haze of a laminated glass was measured using a haze meter in accordance with JIS K6714, and the maximum value of haze of the laminated glass in the 5-cm region R, and the maximum value of haze of the laminated glass were determined.

### (4) Appearance of laminated glass

Appearance of the obtained laminated glass was visually observed.

### [Criteria for judgement in appearance of laminated glass]

○: A crease is not generated in the interlayer film, and the appearance of the laminated glass is good.
×: A crease is generated in the interlayer film, and the appearance of the laminated glass is not good.

The configurations and the results of laminated glasses are shown in the following Tables 1 and 2.

**[Table 1]**

| | | | Example 1 | Example 2 | Example 3 | Example 4 | Example 5 |
|---|---|---|---|---|---|---|---|
| Interlayer film | Second layer | Resin | PVB | PVB | PVB | PVB | PVB |
| | | Thickness (µm) | 780 | 780 | 780 | 780 | 780 |
| | Film having optical properties | Kind | PET film | PET film | PET film | PET film | PET film |
| | | Thickness (µm) | 100 | 100 | 100 | 100 | 100 |
| | Third layer | Resin | PVB | PVB | PVB | PVB | PVB |
| | | Thickness (µm) | 380 | 380 | 380 | 380 | 380 |
| Deaerating step | Member used | Kind | Round type vacuum rubber tube | Cornered type vacuum rubber tube | Round type vacuum rubber tube | Vacuum bag | Nipper roll |
| | Inner peripheral length of vacuum rubber tube | cm | 105 | 100 | 100 | - | - |
| | Maximum pressure exerted on corner part of lamination glass member | MPa | 5 | 2.5 | 2.5 | 2.5 | 2.5 |
| Maximum value of distance L from end part of first lamination glass member to end part of PET film | | mm | 5 | 5 | 5 | 5 | 5 |
| Maximum value of height of recesses and projections of surface of PET film in 5-cm region R | | µm | 50 | 0 | 0 | 0 | 0 |
| Maximum value of haze of laminated glass in 5-cm region R | | % | 0.8 | 0.6 | 0.6 | 0.6 | 0.6 |
| Maximum value of haze of laminated glass | | % | 0.8 | 0.6 | 0.6 | 0.6 | 0.6 |
| Appearance of laminated glass | | - | ○ | ○ | ○ | ○ | ○ |

**[Table 2]**

| | | | Example 6 | Example 7 | Example 8 | Example 9 | Comparative Example 1 |
|---|---|---|---|---|---|---|---|
| Interlayer film | Second layer | Resin | PVB | PVB | PVB | PVB | PVB |
| | | Thickness (µm) | 780 | Minimum thickness: 670 Maximum thickness: 1515 Average thickness: 1096 | 780 | 780 | 780 |
| | Film having optical properties | Kind | PET film | PET film | PET film | PET film | PET film |
| | | Thickness (µm) | 100 | 100 | 100 | 100 | 100 |
| | Third layer | Resin | PVB | PVB | PVB | PVB | PVB |
| | | Thickness (µm) | 380 | 380 | 380 | 380 | 380 |
| Deaerating step | Member used | Kind | Round type vacuum rubber tube | Round type vacuum rubber tube | Round type vacuum rubber tube | Round type vacuum rubber tube | Round type vacuum rubber tube |
| | Inner peripheral length of vacuum rubber tube | cm | 145 | 145 | 145 | 145 | 100 |
| | Maximum pressure exerted on corner part of lamination glass member | MPa | 5 | 5 | 5 | 5 | 10 |
| Maximum value of distance L from end part of first lamination glass member to end part of PET film | | mm | 5 | 5 | 5 | 5 | 5 |
| Maximum value of height of recesses and projections of surface of PET film in 5-cm region R | | µm | 50 | 50 | 50 | 50 | 250 |
| Maximum value of haze of laminated glass in 5-cm region R | | % | 0.8 | 0.8 | 0.8 | 0.8 | 2.8 |
| Maximum value of haze of laminated glass | | % | 0.8 | 0.8 | 0.8 | 0.8 | 2.8 |
| Appearance of laminated glass | | - | ○ | ○ | ○ | ○ | × |

### EXPLANATION OF SYMBOLS

1, 1A: Film having optical properties
1a, 1Aa: First surface
1b, 1Ab: Second surface
2, 2A: Second layer
2a, 2Aa: Outer surface
3, 3A: Third layer
3a, 3Aa: Outer surface
11, 11A: Interlayer film
11a, 11Aa: First surface
11b, 11Ab: Second surface
21: First lamination glass member
22: Second lamination glass member
25: Lamination glass member
31, 31A: Laminated glass
50, 50A: Vacuum rubber tube

## Claims

1. A laminated glass comprising a first lamination glass member, a second lamination glass member, and an interlayer film,
the interlayer film being arranged between the first lamination glass member and the second lamination glass member,
the interlayer film including a film having optical properties, and a second layer containing a thermoplastic resin,
a maximum value of distance from an end part of the first lamination glass member to an end part of the film having optical properties being 15 mm or less,
in a 5-cm region inward from the end part of the first lamination glass member, a maximum value of height of recesses and projections of surface of the film having optical properties in cross section observation along a thickness direction of the film having optical properties being 100 um or less.

2. The laminated glass according to claim 1, wherein in the 5-cm region, the maximum value of height of recesses and projections of surface of the film having optical properties in cross section observation along the thickness direction of the film having optical properties is 50 um or less.

3. The laminated glass according to claim 1 or 2, wherein in the 5-cm region, a maximum value of haze of the laminated glass is 2% or less.

4. The laminated glass according to any one of claims 1 to 3, wherein a maximum value of haze of the laminated glass is 2% or less.

5. The laminated glass according to any one of claims 1 to 4, wherein each of the first lamination glass member and the second lamination glass member has a corner part of 100° or less in plan view.

6. The laminated glass according to any one of claims 1 to 5, wherein each of the first lamination glass member and the second lamination glass member has a corner part of 80° or less in plan view.

7. The laminated glass according to any one of claims 1 to 6, obtained by conducting:
an arranging step of arranging the interlayer film between the first lamination glass member and the second lamination glass member to obtain a laminate; and
a deaerating step of deaerating such that a pressure to be exerted on corner parts of the first lamination glass member and the second lamination glass member is 8 MPa or less.

8. The laminated glass according to claim 7, obtained by conducting the deaerating step in a condition that a vacuum rubber tube is attached to an outer periphery of the laminate, a condition that the laminate is arranged inside a vacuum bag, or a condition that the laminate is pressed by two rubber rolls using a nipper roll.
